# EUROPÄISCHE PATENTSCHRIFT

(11) **EP 3 847 211 B1**
(45) Veröffentlichungstag und Bekanntmachung des Hinweises auf die Patenterteilung: **09.04.2025**
(21) Anmeldenummer: 19779357.3
(22) Anmeldetag: 04.09.2019
(51) Int. Cl.: C08L 7/00

(54) **LÖSEMITTELFREIES VORANSTRICHMITTEL FÜR DEN KORROSIONSSCHUTZ AN SCHWEISSNÄHTEN UND ANDEREN REPARATURSTELLEN AN KATHODISCH GESCHÜTZTEN UND NICHT KATHODISCH GESCHÜTZTEN, KUNSTSTOFFUMMANTELTEN STAHLROHREN**
SOLVENT-FREE PREPAINT FOR CORROSION PROTECTION AT WELDS AND OTHER REPAIR POINTS ON CATHODICALLY PROTECTED AND CATHODICALLY UNPROTECTED, PLASTIC-SHEATHED STEEL PIPES
COUCHE D'APPRÊT EXEMPTE DE SOLVANT SERVANT À LA PROTECTION CONTRE LA CORROSION DE CORDONS DE SOUDURE ET AUTRES ZONES À RÉPARER SUR DES TUYAUX EN ACIER REVÊTUS DE PLASTIQUE, À PROTECTION CATHODIQUE ET SANS PROTECTION CATHODIQUE

(30) Priorität: 04.09.2018 DE 102018121477
(43) Veröffentlichungstag der Anmeldung: 14.07.2021
(73) Patentinhaber: I s G Isolierchemie GmbH & Co. Kunststoff Kg, 45701 Herten (DE)
(72) Erfinder: GRYSHCHUK, Oleg, 51381 Leverkusen (DE)
(74) Vertreter: Tarvenkorn, Oliver
(86) Internationale Anmeldenummer: PCT/DE2019/100795
(87) Internationale Veröffentlichungsnummer: WO 2020/048568

(56) Entgegenhaltungen:
- EP-A2- 0 232 936
- EP-B1- 0 390 436
- EP-B1- 0 550 591
- WO-A1-90/13488
- WO-A2-2010/066403
- CN-A- 103 484 050
- JP-A- 2005 226 064
- JP-A- 2018 119 242
- JP-A- S5 540 722
- JP-A- S59 142 392
- JP-A- S59 174 658
- US-A- 3 676 287
- US-A1- 2017 369 739

## Beschreibung

Die Erfindung betrifft ein von organischen Lösemitteln freies, wasserbasierendes Voranstrichmittel für den Korrosionsschutz an kathodisch geschützten und nicht kathodisch geschützten, kunststoffummantelten Stahlrohren.

Korrosionsschutzumhüllungen bzw. Korrosionsschutzbandumhüllungen werden typischerweise eingesetzt, um metallische Rohrleitungen in Pipelines aber auch in sonstigen technischen Anlagen vor Korrosion zu schützen. Das gilt insbesondere für den Stoßbereich medienführender metallischer Rohrleitungen, die in dem fraglichen Stoßbereich miteinander verschweißt sind. Tatsächlich wird typischerweise zum Verschweißen eine werksseitig aufgebrachte Kunststoffisolierung der metallischen Rohrleitungen zunächst entfernt und anschließend werden die beiden Rohrleitungen miteinander verschweißt. Um nun den freiliegenden Stoßbereich dieser metallischen Rohrleitungen dauerhaft wieder zu verschließen und vor Korrosionen zu schützen, muss eine Korrosionsschutzbandumhüllung auf die zu schützende Oberfläche aufgebracht werden. Die Reparaturstelle muss so vorbereitet werden, dass ein guter Haftgrund besteht. Die Besonderheit bei einem für diesen speziellen Anwendungszweck geeigneten Voranstrichmittel besteht darin, dass eine sichere Haftung zu den drei gleichzeitig an derselben Reparaturstelle vorliegenden Werkstoffen herstellen muss, nämlich:
- zu der frei gelegten Außenseite des metallischen Rohrs samt Schweißnaht
- zu den unmittelbar an die Reparaturstelle angrenzenden Randbereichen der polyolefinischen Kunststoffumhüllung des Rohrs sowie
- zu dem Korrosionsschutzmaterial, das im Bereich der Reparaturstelle abgetragene Kunststoffumhüllung ersetzt.

Weitere Anforderungen sind:
- Der pH-Wert des Voranstrichmittels muss neutral bis alkalisch eingestellt sein, um die beim Auftrag völlig blanke Stahloberfläche nicht anzugreifen.
- Die eingestellte Viskosität muss eine sparsame und zügige Verarbeitung, aber auch eine mit dem Auftrag sofort einsetzende Selbsthaftung an der Reparaturstelle ermöglichen.
- Der Auftrag soll mit einfachsten Hilfsmitteln wie Pinseln und Rollen durchführbar sein.

Entsprechend muss das Voranstrichmittel zusammen mit dem darauf aufzubringenden Korrosionsschutzmaterial, wie beispielsweise einem auf das mit dem Voranstrichmittel behandelte Rohr aufgelegten Korrosionsschutzband, die Anforderungen von folgenden Normen erfüllen:
1. DIN 30672 / Organische Umhüllungen für den Korrosionsschutz von in Böden und Wässern verlegten Rohrleitungen für Dauerbetriebstemperaturen bis 50 °C ohne kathodischen Korrosionsschutz - Bänder und schrumpfende Materialien.
2. DIN EN 12068 / Kathodischer Korrosionsschutz. Organische Umhüllungen für den Korrosionsschutz von in Böden und Wässern verlegten Stahlrohrleitungen im Zusammenwirken mit kathodischem Korrosionsschutz - Bänder und schrumpfende Materialien
3. DIN EN ISO 21809-3 / Erdöl- und Erdgasindustrie - Umhüllungen für erd- und wasserverlegte Rohrleitungen in Transportsystemen - Teil 3: Nachumhüllung der Schweißverbindungen.

Versagt an irgendeiner Stelle auf einem der drei genannten Werkstoffe, die mindestens vorliegen, die Haftung, wenn auch nur partiell, so ist das gesamte Korrosionsschutzsystem unwirksam. Erst die sichere Haftung des Korrosionsschutzsystems zugleich auf der Reparaturstelle des Stahlrohrs und auf den angrenzenden Randbereichen der Kunststoffumhüllung führt zu einer dauerhaft korrosionsbeständigen Naht- oder Reparaturstelle an einem Stahlrohr, insbesondere in einer Pipeline. Dafür ist das Voranstrichmittel das Bindeglied.

Schließlich muss das abgetrocknete Voranstrichmittel auch in sich wasser- und sauerstoffundurchlässig zu sein, um die Korrosion der metallischen Oberfläche vor und auch nach der Aufbringung des Korrosionsschutzsystems zu gewährleisten.

Außerdem wichtig ist die Eignung des Voranstrichmittels, die sichere Haftung sowohl auf kathodisch geschützten wie auch auf nicht kathodisch geschützten Stahlrohren zu bewirken.

Gemäß der DE 10 2015 105 747 A1 kommt als Haftvermittler ein sogenanntes Voranstrichmittel zum Einsatz. Das Voranstrichmittel umfasst ein Lösemittel auf Benzinbasis und mindestens ein Kohlenwasserstoffharz. Da insbesondere im Zusammenhang mit der Verschweißung von Rohrleitungen und der Vorbereitung der jeweils zu schützenden Oberfläche durchweg mit Hitze und beispielsweise offener Flamme oder einem Heißluftgebläse gearbeitet wird, ist die anschließende Anwendung bzw. Bevorratung eines solchen Voranstrichmittels problematisch, welches mindestens ein Lösemittel auf Benzinbasis aufweist. Hinzu kommt, dass solche Lösemittel hinsichtlich ihres etwaigen Recyclings in Bezug auf Emissionen und durch ihre leichte Entflammbarkeit zu Umwelt- und Gesundheitsgefährdungen am Arbeitsplatz und vor allem zu erheblichen Transportproblemen führen können. Die lösemittelhaltigen Voranstriche dürfen nicht per Luftfracht versendet werden, da sie leichtentzündlich sind. Da jedoch anderseits die Einsatzorte für solche Voranstrichmittel, nämlich insbesondere beim Pipelinebau, in der Regel weit von Lager- und Produktionsstätten entfernt liegen, stellt der notwendige Straßentransport mit entsprechenden Gefahrgutzulassungen einen erheblichen Zeit- und Kostenfaktor dar.

Der Erfindung liegt somit das technische Problem zugrunde, ein Voranstrichmittel für den Korrosionsschutz im Schweißnahtbereich, an Reparaturstellen oder zur Ganzrohrisolierung an kathodisch geschützten und nicht kathodisch geschützten, kunststoffummantelten Stahlrohren anzugeben, das frei von organischen Lösemitteln ist.

Zur Lösung dieser technischen Problemstellung wird nach der vorliegenden Erfindung von organischen Lösemitteln freies, wasserbasierendes vorgeschlagen.

Im Rahmen der Erfindung kommt als Voranstrich eine wässrige bzw. wasserbasierte Dispersion zum Einsatz, die lösungsmittelfrei ausgelegt ist, also auf übliche organische Lösungsmittel wie beispielsweise Benzin ausdrücklich verzichtet und lediglich Wasser zur Herstellung der Dispersion einsetzt.

Im Sinne der vorliegenden Erfindung wird Wasser nicht als ein Lösemittel betrachtet, da hiervon die geschilderten Nachteile bei Herstellung, Transport und Anwendung nicht ausgehen.

Die mit der Erfindung erzielten Vorteile liegen insbesondere darin, dass:
- der Auftrag mit einfachsten Hilfsmitteln wie z. B. Pinseln oder Rollen durchführbar möglich ist.
- das Voranstrichmittel frei von organischen Lösemitteln und daher nicht brennbar und nicht entzündlich ist; Transport und Lagerung werden ganz wesentlich vereinfacht.
- das Voranstrichmittel mit passendem Korrosionsschutzmaterial wie insbesondere butylkautschukbasierenden Bändern und Schrumpfmanschetten verträglich ist und die gültige Normanforderungen an das Korrosionsschutzsystem erfüllt.

Das erfindungsgemäße Voranstrichmittel setzt sich zumindest aus den nachfolgend genannten Komponenten zusammen:
- Komponente K1: eine wasserbasierte Kautschukdispersion,
- Komponente K2: eine wasserbasierte Harzdispersion, und
- Komponente K3: eine wasserbasierte Silanemulsion.

Zur weiteren Verbesserung der Verträglichkeit der Komponenten K1 bis K3 miteinander und zur Erhöhung der Schälfestigkeit des fertigen Korrosionsschutzsystems gegenüber dem Substrat kann bevorzugt eine vierte Komponente K4, nämlich ein flüssiges wasserlösliches Phenolformaldehydharz und/oder eine wasserbasierte Phenolformaldehydharzdispersion, zusätzlich im Voranstrichmittel eingesetzt werden.

Für die Einstellung der applikationsrelevanten Eigenschaften des erfindungsgemäßen Voranstrichmittels können auch weitere Additive verwendet werden, wie zum Beispiel wässrige Rheologiestellmittel für die Einstellung der Viskosität des Voranstriches oder Entschäumer für die Bildung einer dichten blasenfreien Schicht auf der Rohoberfläche. Zur Einfärbung des Voranstrichmittels können wasserbasierende Farbpasten eingesetzt werden.

Die erste Komponente K1, die wasserbasierte Kautschukdispersion, bildet nach dem Trocknen eine für Wasser und Sauerstoff undurchlässige Schicht, welche einen hervorragenden Korrosionsschutz der metallischen Oberfläche gewährleistet und die Haftung des aufgebrachten Korrosionsschutzsystems auf dem Substrat sicherstellt.

Die wasserbasierte Kautschukdispersion beinhaltet als Kautschuk einen solchen aus der Gruppe Butyl-, Brombutyl-, Isopren-, oder Chloroprenkautschuk einzeln oder in Kombination davon. Hierbei geht die Erfindung zunächst einmal von der Erkenntnis aus, dass die Herstellung einer wasserbasierten Kautschukdispersionen grundsätzlich bekannt ist.

Da die wasserbasierenden Dispersionen oder Emulsionen in der Regel mit Wasser verdünnbar sind, werden die Mengenangaben der Voranstrichkomponenten als Trockengehalt auf den getrockneten Voranstrich bezogen; das bedeutet, dass die Menge an Wasser bei der Berechnung nicht berücksichtigt wird.

Die wasserbasierte Kautschukdispersion als Komponente K1 liegt erfindungsgemäß im Voranstrichmittel mit einem Anteil von 10 Gew.-% bis 60 Gew.-%, Trockengehalt vor, bezogen auf die Gesamtmasse des getrockneten Voranstriches. Insbesondere beobachtet man für die wasserbasierte Kautschukdispersion einen Anteil von 15 Gew.-% bis 50 Gew.-%, vorzugsweise einen Anteil von 20 Gew.-% bis 40 Gew.-%, jeweils Trockengehalt bezogen auf die Gesamtmasse des getrockneten Voranstriches.

Tatsächlich fällt der betreffende Kautschuk als Flüssigkeit an und kann als lösungsmittelfreie wässrige Dispersion durch einfaches Vermischen hergestellt werden, wie dies beispielhaft in der WO 2002/010302 A1 mit weiteren Nachweisen beschrieben wird. Dort ist auch die grundsätzliche Herstellung einer wasserbasierten Harzdispersion beschrieben.

Eine zweite Komponente K2, die wasserbasierte Harzdispersion, auch als Tackifier bezeichnet, verbessert die Haftung zugleich zu unpolaren Substraten wie der polyolefinischen Kunststoffummantelung des Rohrs und zugleich zu einer frei liegenden Stahloberfläche. Dabei kann die wasserbasierte Harzdispersion im Rahmen der Erfindung als Harz ein Kohlenwasserstoffharz und/oder ein Naturharz aufweisen.

Die wasserbasierte Harzdispersion als Komponente K2 liegt in einem Anteil von 20 Gew.-% bis 90 Gew.-%, Trockengehalt, bezogen auf die Gesamtmasse des getrockneten Voranstriches, in dem Voranstrichmittel vor. Insbesondere wird für die wasserbasierte Harzdispersion ein Anteil von 25 Gew.-% bis 85 Gew.-% als besonders geeignet angesehen. Vorzugsweise liegt der Anteil der wasserbasierten Harzdispersion im Haftvermittler bei 30 Gew.-% bis 75 Gew.-%, jeweils Trockengehalt bezogen auf die Gesamtmasse des getrockneten Voranstriches.

Die dritte Komponente K3 des erfindungsgemäßen Voranstrichmittels ist eine wässrige Emulsion von vorhydrolysierten organofunktionellen Silanen und/ oder deren Mischungen. Organofunktionelle Silane wirken als molekulare Brücken zwischen organischen Polymeren und anorganischen Materialien.

Die organofunktionellen Silane sind aus einer Reihe von Silanen ausgewählt, die Alkoxygruppen und organische Gruppen, wie z.B. Amino-, Vinyl- und Epoxygruppen aufweisen. Diese sind besonders geeignet, um die genannte Brückenfunktion in dem bevorzugten Anwendungsfeld des Voranstrichmittels, nämlich der Herstellung oder Reparatur von Korrosionsschutzsystem auf Stahlrohren, nach der Erfindung zu erfüllen

Schnell ablaufende Prozesse erfordern häufig Silane, bei denen der erste Schritt zur Formierung von Silanolgruppen bereits erfolgt ist und daher eine schnelle Reaktion mit dem Substrat ablaufen kann. Deshalb werden erfindungsgemäß bereits vorhydrolysierte organofunktionelle Silane zum schnelleren Trocknen eingesetzt. Die organofunktionellen Silane werden außerdem eingesetzt, um die Haftung auf unpolaren Substraten und auf Stahl zu verbessern. Beim Trocknen des Voranstrichmittels bilden die vorhydrolysierten Silane eine stabile chemische Verbindung mit der Stahloberfläche und führen zu einer deutlichen Reduktion der Wasseraufnahme.

Um metallische Bauteile vor Korrosion zu schützen, wird oft ein organisches Beschichtungssystem mit zusätzlichem kathodischem Korrosionsschutz angewandt. Die Kombination von passivem und aktivem Korrosionsschutz, d.h. von organischer Beschichtung und kathodischem Korrosionsschutz (KKS) durch z.B. Fremdstrom kommt im Allgemeinen an metallischen Bauwerken, wie insbesondere unterirdisch gelagerten Tanks und bei Pipelines, zum Einsatz.

Diese Kombination ist aber keineswegs chemisch unproblematisch, da die an der Kathode entstehenden Hydroxidionen lokal zu einem alkalischen Elektrolyten führen, der je nach Beschichtungssystem mit polaren Haftgruppen zwischen der Beschichtung und dem Substrat oder aber mit der Beschichtung selbst reagieren kann. Dies führt im ersten Fall zur Delamination der Beschichtung (Adhäsionsverlust), im zweiten Fall zu einer Verringerung der mechanischen Festigkeit innerhalb der Beschichtung (Kohäsionsverlust) und letztendlich zur Blasenbildung und Zerstörung des Korrosionsschutzsystems.

Durch die chemische Verbindung des erfindungsgemäßen Voranstrichmittels mit einer Stahloberfläche über die organofunktionellen Silane ist eine Beständigkeit gegen eine kathodische Enthaftung bei höheren Temperaturen gegeben. Damit kann das erfindungsgemäße Voranstrichmittel immer eingesetzt werden, ganz egal, ob ein kathodischer Korrosionsschutz vorgesehen ist oder nicht. Insofern ist die für das erfindungsgemäße Voranstrichmittel genannte Zweckangabe wichtig

Für den vorgenannten dritten Bestandteil K3 wird ein Anteil von 0,1 Gew.-% bis 10 Gew.-%, Trockengehalt, bezogen auf die Gesamtmasse des getrockneten Voranstriches, als besonders bevorzugt angesehen. Insbesondere kann der Anteil der dritten Komponente K3 0,2 Gew.-% bis 8 Gew.-%, vorzugsweise 0,5 Gew.-% bis 5 Gew.-% betragen, jeweils als Trockengehalt bezogen auf die Gesamtmasse des getrockneten Voranstriches.

Wie bereits erläutert, ist das erfindungsgemäße Voranstrichmittel als wässrige sowie von organischen Lösungsmitteln freie Dispersion ausgelegt. Neben den Hauptbestandteilen K1, K2 und K3 des erfindungsgemäßen Voranstrichmittels, das heißt:
- der wasserbasierten Kautschukemulsion K1,
- der wasserbasierten Harzdispersion K2 und
- der wässrigen Emulsion von vorhydrolysierten organofunktionellen Silanen K3,
ist vorzugsweise zusätzlich eine vierte Komponente K4 zur Verbesserung der Verträglichkeit der Komponenten K1 bis K3 und zur Erhöhung der Schälfestigkeit des Korrosionsschutzsystems möglich. Als Komponente K4 ist die Zugabe eines flüssigen wasserlöslichen Phenolformaldehydharzes oder einer wässrigen Phenolformaldehydharzdispersion, bevorzugt eines Resolharzes, vorgesehen.

Für den vorgenannten vierten Bestandteil K4 wird ein Anteil von 1 Gew.-% bis 30 Gew.-%, Trockengehalt, bezogen auf die Gesamtmasse des getrockneten Voranstriches, als besonders bevorzugt beobachtet. Insbesondere kann der Anteil des vierten Bestandteiles K4 zwischen 3 Gew.-% und 20 Gew.-% und vorzugsweise 5 Gew.-% bis 15 Gew.-% betragen, jeweils als Trockengehalt bezogen auf die Gesamtmasse des getrockneten Voranstriches.

Die Trocknungszeit ist insgesamt temperaturabhängig. Besonders vorteilhaft an dem erfindungsgemäßen Voranstrichmittel ist, dass seine Komponenten K1 bis K3 und ggf. K4 einzeln wie in der Mischung miteinander temperaturstabil für einen weiten Arbeitstemperaturbereich sind. Insgesamt wird durch das erfindungsgemäße Voranstrichmittel ein Haftvermittler zur Verfügung gestellt, der bei Raumtemperatur verarbeitbar ist, auch wenn er dann eine lange Trocknungszeit aufweist. Die Trocknungszeit kann in der Regel durch Vorwärmen der Oberfläche der Reparaturstelle vor dem Auftrag des erfindungsgemäßen Voranstrichmittels auf eine Temperatur größer 40°C bis auf wenige Minuten, jedenfalls bis auf deutlich weniger als eine Stunde, reduziert werden. Um eine schnellere Trocknung zu gewährleisten, sollte die zu umhüllende Oberfläche also vorgewärmt werden, beispielsweise von 40° bis 70°C.

Hinzu kommt als besonderer Vorteil der Erfindung, dass die Trocknung des erfindungsgemäßen Voranstrichmittels mit einem Farbumschlag verbunden ist, sofern keine Farbpigmentpaste zum Einfärben des Voranstrichmittels verwendet wird. Das lässt sich darauf zurückführen, dass der noch feuchte wässrige Voranstrich auf Elastomerbasis durch den Kautschukanteil bzw. den Rückgriff auf eine entsprechenden Kautschukdispersion und/oder das eingesetzte Harz üblicherweise über eine weiße Farbe verfügt, die mit zunehmender Trocknung verschwindet, so dass anschließend der Voranstrich größtenteils transparent wird. Das erfindungsgemäße Voranstrichmittel besitzt also einen inhärenten Trocknungsindikator.

Tatsächlich liegen die Kautschukdispersion (K1) und die Harzdispersion (K2) jeweils als milchige und folglich weiße Flüssigkeit vor, die insgesamt die wasserbasierte Dispersion als Bestandteil des Voranstrichs bildet. Dadurch wird der zuvor beschriebene Farbumschlag bei der Trocknung beobachtet, welcher als ergänzendes Kriterium für die hinreichende Trocknung und das Absolvieren der Trocknungszeit herangezogen werden kann.

Für die Herstellung der Rezeptur des erfindungsgemäßen Voranstrichmittels wird so vorgegangen, dass die Komponente K2, die wasserbasierte Harzdispersion, bei 23 °C in die Komponente K1, die wasserbasierte Kautschukdispersion, unter ständigem Rühren mit einem üblichen mechanischen Rührer zugegeben wurde. Danach wird 5 bis 10 Minuten weiter vorsichtig gerührt. Bei diesem Rührvorgang ist dann auch die dritte Komponente K3, die Silanemulsion, zugegeben und weitere 10 bis 15 Minuten gerührt worden. Die möglichen Additive, wie eine Farbpaste und ein Rheologiestellmittel, werden zugegeben und innerhalb ca. 1 Minute untergerührt. Abschließend wird die vierte Komponente, nämlich das flüssige wasserlösliche Phenolformaldehydharz bzw. die wässrige Phenolformaldehydharzdispersion, zugegeben und weitere 5 Minuten gerührt.

Wesentlich für die Erfindung ist, dass alle Komponenten K1 bis K3 und ggf. K4, die das erfindungsgemäße Voranstrichmittel umfasst, miteinander misch- und lagerbar sind und vor allem auch zusammen anwendbar sind. Trotz der ganz unterschiedlichen Wirkungsmechanismen der jeweiligen Komponenten ist deren Auswahl so getroffen, dass sie zusammen verstrichen werden können und aus der Mischung heraus ihre jeweilige Wirkung entfalten.

Nachfolgend wird ein Beispiel beschrieben, wie eine Schweißnaht an einem Stoß zweier kunststoffummantelter Stahlrohre nachträglich mit einem Korrosionsschutz versehen wird.

Ein auf die vorbereitete und zu umhüllende Oberfläche an der Stoßstelle aufzubringendes Kunststoffband kann ein- oder zweilagig aufgebaut sein. Auch eine Schrumpfmanschette lässt sich aufbringen. Im Falle eines zweilagigen Kunststoffbandes wird bevorzugt mit einem Innenband und einem Außenband gearbeitet. Dabei werden zunächst das Innenband auf die Oberfläche und anschließend das Außenband auf das Innenband aufgebracht. Dabei können beide Bänder vorzugsweise kalt verarbeitet werden. Es ist aber auch eine Warmverarbeitung möglich wie im Fall einer Schrumpfmanschette.

Bei dem Innenband und auch dem Außenband handelt es sich typischerweise um ein Elastomerband. Es ist aber auch möglich, dass das Innenband als Elastomerband und das Außenband als Thermoplastband ausgebildet ist.

Das Elastomerband besteht zu diesem Zweck vorteilhaft aus Butylkautschuk. Als geeignete Butylkautschuke können typischerweise unvernetzte Butylkautschuke eingesetzt werden. Insbesondere fallen hierunter Co- oder Block-Copolymere von Isobutylen mit etwa 0,5 Gew.-% bis etwa 5,0 Gew.-% Isopren, bezogen auf die Gesamtmasse des Butylkautschuks. Außerdem können hierunter halogenierte Butylkautschuke oder auch Gemische mehrerer Butylkautschuke fallen.

Sowohl das Innenband als auch das Außenband können einzeln oder kumulativ selbstklebend ausgebildet sein. Dabei wird meistens auf einen Kleber auf PE-Basis (Polyethylen) zurückgegriffen. Bevorzugt kommt ein Kleber auf Butylkautschukbasis zum Einsatz. Tatsächlich ist in der Regel das Innenband mit einer Klebeschicht auf seiner inneren Oberfläche ausgerüstet. Die Dicke der Klebeschicht kann ca. 0,1 mm bis 1 mm betragen. Die Dicke des Innenbandes liegt bei ca. 0,5 mm bis 1,5 mm.

Bei dem Außenband handelt es sich regelmäßig um eine Trägerfolie aus Polyethylen (PE), Polypropylen (PP) oder einen anderen Thermoplasten mit einer Dicke von 0,2 mm bis 0,5 mm. Es kann auch mehrschichtig ausgebildet sein. Das Außenband ist im Allgemeinen nicht selbstklebend ausgebildet und sorgt primär für den mechanischen Schutz der Umhüllung nach außen hin. Demgegenüber ist das Innenband mit einer stoßfesten Schicht in Gestalt des eingesetzten Elastomers bzw. Butylkautschuks ausgerüstet und mit der bereits angesprochenen Klebeschicht auf der inneren Oberfläche versehen. Nach der Anbringung des Außenbandes auf das Innenband kommt es zur Kaltverschmelzung beider Bänder und zur gewünschten Versiegelung der zu schützenden Oberfläche.

Die Anbringung des Innenbandes respektive des Außenbandes erfolgt jeweils dadurch, dass die zu umhüllende Oberfläche umwickelt wird. Eine solche Vorgehensweise empfiehlt sich insbesondere bei Rohrleitungen. Die Umwicklung mit Hilfe des Innenbandes und/oder des Außenbandes erfolgt dabei insgesamt wendelförmig, wobei mit mindestens 30 % und insbesondere mindestens 50 % Überlappung gearbeitet wird. Das heißt, die vorauseilende und nacheilende Wendel des jeweiligen Bandes überdecken sich derart, dass die nacheilende Wendel mit mindestens 30 % ihrer Streifenbreite die vorauseilende Wendel überlappt.

Im Ergebnis wird eine entsprechende Korrosionsschutzumhüllung zur Verfügung gestellt, welche eine besonders umweltfreundliche und nicht gesundheitsgefährdende Umhüllung der zu schützenden Oberflächen erreicht. Das lässt sich im Kern darauf zurückführen, dass als Voranstrich eine wässrige sowie von organischen Lösemitteln freie Dispersion auf die zu schützende Oberfläche aufgetragen wird. Hierin sind die wesentlichen Vorteile zu sehen.

Der erfindungsgemäß entwickelte, wasserbasierende und lösemittelfreie Voranstrichmittel für eine Korrosionsschutzumhüllung erfüllt nicht nur die oben genannten Normanforderungen, sondern besitzt im Vergleich zu bekannten, lösemittelhaltigen Voranstrichmitteln für den speziellen Anwendungszweck des Korrosionsschutzes an kunststoffummantelten Stahlrohren den besonderen Vorteil, dass es umweltfreundlich ist und nicht als Gefahrgut beim Transport eingestuft ist, weil es nicht brennbar und nicht entzündlich ist.

Ein Anwendungsverfahren zur Herstellung eines Korrosionsschutzes an kunststoffummantelten Stahlrohren unter Verwendung des erfindungsgemäßen Voranstrichmittels wird nachfolgend unter Bezug auf die Figuren erläutert.

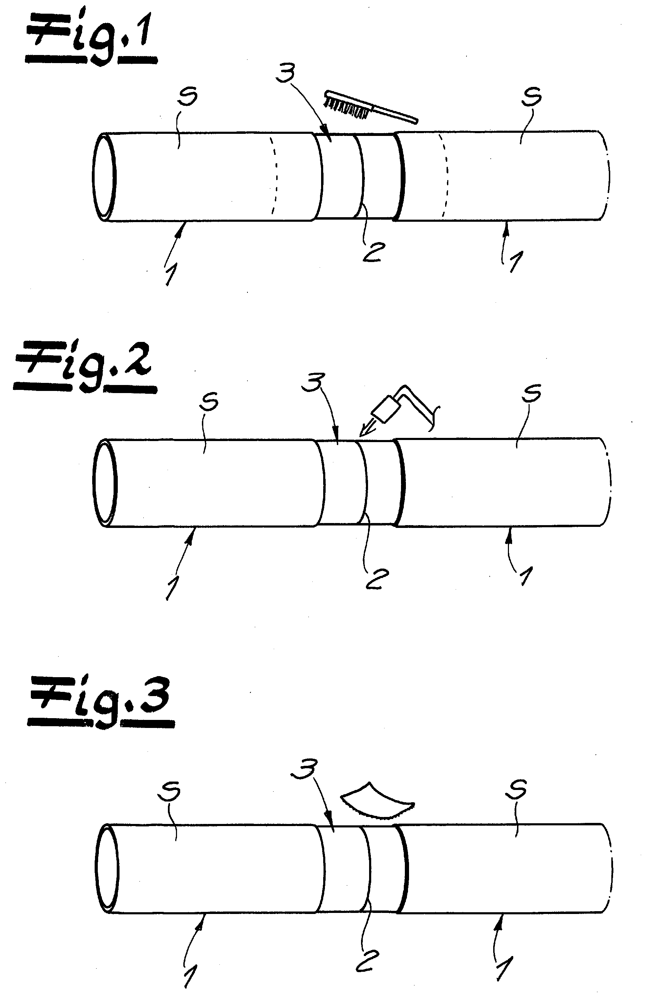

Die Figuren 1 bis 6 zeigen jeweils einen Stoß zweier Stahlrohre in unterschiedlichen Phasen des Anwendungsverfahrens.

In der Fig. 1 erkennt man zwei metallische Stahlrohre 1, die im Stoßbereich 3 mit einer Schweißverbindung 2 verbunden sind. Um die Schweißverbindung 2 anbringen zu können, ist zunächst im Stoßbereich eine Kunststoffumhüllung, bzw. ein sogenannter Werksmantel, in Gestalt einer Polyethylen(PE)-Schicht S entfernt worden, so dass anschließend die freigelegten Oberflächenbereiche 3 am Ende der metallischen Innenrohre mit der Schweißverbindung 2 verbunden werden können.

Damit die Rohrleitungen 1 im Bereich ihres Stoßes und der dort freigelegten Oberfläche 3 später nicht korrodieren, wird erfindungsgemäß eine Korrosionsschutzumhüllung auf die Oberfläche 3 aufgebracht, wie dies nachfolgend im Detail erläutert wird.

Dazu wird zunächst entsprechend der Darstellung in der Fig. 1 die Oberfläche 3 gesäubert und gegebenenfalls von Restfeuchte befreit, wie in der Figur 2 gezeigt. Dazu kann mit einem Heißluftgebläse oder, wie dargestellt, mit einer offenen Propangasflamme gearbeitet werden.

In der folgenden Fig. 3 wird dann gegebenenfalls der Übergang der Oberfläche 3 zur Umhüllung bzw. zur PE-Schicht S geglättet und gereinigt, was durch ein angedeutetes Schleifpapier illustriert wird.

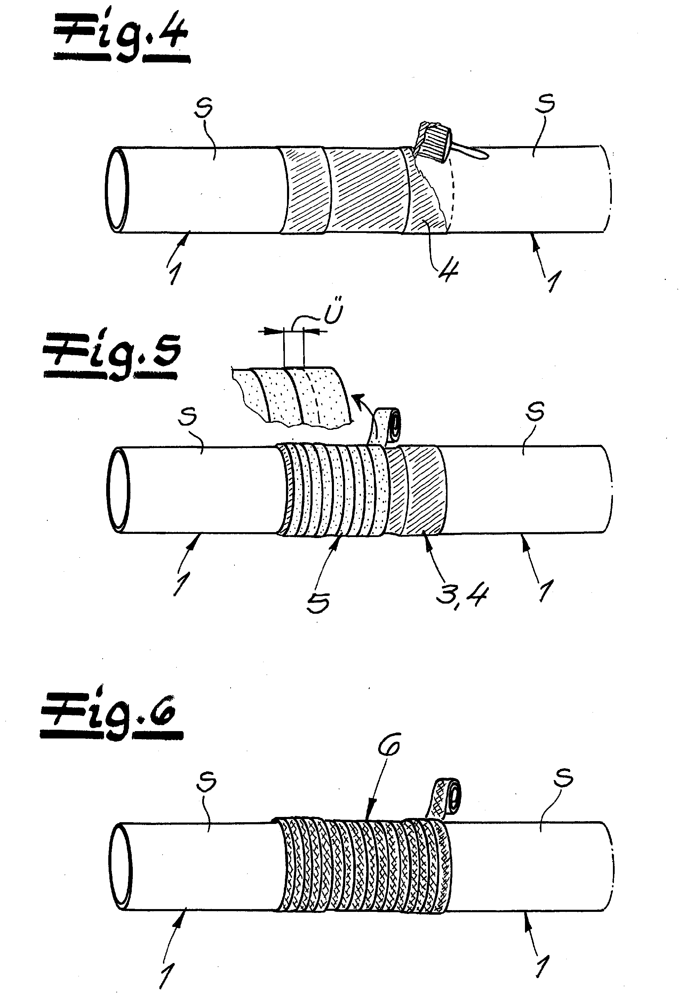

Anschließend erfolgt im Rahmen der Fig. 4 der Auftrag eines Voranstrichmittels 4 auf Elastomerbasis. Als Voranstrichmittel 4 kommt erfindungsgemäß eine wässrige sowie lösungsmittelfreie Dispersion zum Einsatz, die auf die zu schützende Oberfläche 3 aufgetragen wird. Zu Einzelheiten hinsichtlich der chemischen Zusammensetzung und der physikalischen Eigenschaften insbesondere des Schälwiderstandes des Haftvermittlers 4 sei auf die vorangestellten Ausführungen verwiesen.

Nachdem das Voranstrichmittel 4 getrocknet ist, was in der Regel bei Raumtemperatur Trocknungszeiten von weniger als 10 min erfordert, kann anschließend die eigentliche Umhüllung aufgebracht werden. Die Trocknung des Voranstrichmittels 4 ist dabei noch mit einem Farbumschlag verbunden. Tatsächlich verfügt der noch feuchte Haftvermittler 4 überwiegend über eine weiße Farbe und wird mit zunehmender Trocknung transparent, so dass der Trocknungsvorgang optisch und gegebenenfalls haptisch überprüft werden kann.

Nach dem Abtrocknen des Haftvermittlers 4 wird zunächst entsprechend der Darstellung in der Fig. 5 ein Innenband 5 unter leichter Zugspannung durch Umwickeln auf die Oberfläche 3 aufgebracht. Dabei wird das Innenband 5 wendelförmig um die zu umhüllende Oberfläche 3 des Stahlrohrs, wie auch die angrenzenden Bereiche der PE-Schicht S herumgewickelt. Hierbei wird eine Überlappung Ü von mindestens 30 % beobachtet, wie dies vergrößert in der Fig. 5 dargestellt ist. Das heißt, die Überlappung Ü von mindestens 30 % bedeutet, dass ein nachfolgender Wickel oder Wendel in Bezug auf einen vorauseilenden Wickel mit mindestens 30 % seiner Breite diesen überdeckt, wie dies in der vergrößerten Darstellung in der Fig. 5 wiedergegeben ist.

Nachdem das Innenband 5 auf die zu umhüllende Oberfläche 3 aufgebracht worden ist, wird anschließend das Außenband 6 in vergleichbarer Art und Weise mit ähnlicher Überlappung ebenfalls wendelförmig um die Oberfläche 3 bzw. um das Innenband 5 herumgewickelt, wie die Fig. 6 darstellt.

## Patentansprüche

1. Von organischen Lösemitteln freies, wasserbasierendes Voranstrichmittel für den Korrosionsschutz an Schweißnähten (2) und anderen Reparaturstellen an kathodisch geschützten und nicht kathodisch geschützten, kunststoffummantelten Stahlrohren (1), wenigstens umfassend:
- eine Komponente K1: eine wasserbasierte Kautschukdispersion mit einem Kautschuk aus der Gruppe Butyl-, Brombutyl-, Isopren-, oder Chloroprenkautschuk oder Kombinationen davon, zur Ausbildung einer Sperrschicht zum Absperren der metallischen Reparaturstelle gegenüber von außen eindringendem Wasser, Wasserdampf und Sauerstoff;
- eine Komponente K2: eine wasserbasierte Harzdispersion aus einem Kohlenwasserstoffharz und/oder einem Naturharz, zur Anhaftung auf der metallischen Oberfläche (3) der Reparaturstelle und auf den unpolaren Oberflächen der Kunststoffummantelung (S);
- eine Komponente K3: eine wässrige Emulsion von vorhydrolysierten organofunktionellen Silanen zur Beschleunigung der Trocknung, zur Verbesserung der Haftung zur metallischen Oberfläche, besonderes bei höheren Temperaturen und zur Erhöhung der Beständigkeit gegen kathodischer Enthaftung
wobei folgende Anteile der Komponenten gegeben sind, angegeben jeweils als auf die Gesamtmasse des getrockneten Voranstriches bezogener Trockengehalt:
- Komponente K1 mit einem Anteil von 10 Gew.-% bis 60 Gew.-%,
- Komponente K2 mit einem Anteil von 20 Gew.-% bis 90 Gew.-% und
- Komponente K3 mit einem Anteil von 0,1 Gew.-% bis 10 Gew.-%.

2. Voranstrichmittel nach Anspruch 1, **dadurch gekennzeichnet, dass** die Komponente K3 aus einer Reihe von organofunktionellen Silanen ausgewählt ist, die wenigstens eine Alkoxygruppe und wenigstens eine organische Gruppe aufweisen.

3. Voranstrichmittel nach Anspruch 2, **dadurch gekennzeichnet, dass** die organische Gruppe der Komponente K3 eine Amino-, Vinyl- oder EpoxyGruppe ist.

4. Voranstrichmittel nach wenigstens einem der vorhergehenden Ansprüche 1 bis 3, **gekennzeichnet durch** folgende Anteile der Komponenten, angegeben jeweils als auf die Gesamtmasse des getrockneten Voranstriches bezogener Trockengehalt:
- Komponente K1 mit einem Anteil von 15 Gew.-% bis 50 Gew.-%,
- Komponente K2 mit einem Anteil von 25 Gew.-% bis 85 Gew.-% und
- Komponente K3 mit einem Anteil von 0,2 Gew.-% bis 8 Gew.-%.

5. Voranstrichmittel nach wenigstens einem der vorhergehenden Ansprüche 1 bis 3, **gekennzeichnet durch** folgende Anteile der Komponenten, angegeben jeweils als auf die Gesamtmasse des getrockneten Voranstriches bezogener Trockengehalt:
- Komponente K1 mit einem Anteil von 20 Gew.-% bis 40 Gew.-%,
- Komponente K2 mit einem Anteil von 30 Gew.-% bis 75 Gew.-% und
- Komponente K3 mit einem Anteil von 0,5 Gew.-% bis 5 Gew.-%.

6. Voranstrichmittel nach einem der vorhergehenden Ansprüche, **gekennzeichnet durch** ein flüssiges wasserlösliches Phenolformaldehydharz und/oder eine wasserbasierte Phenolformaldehydharzdispersion als zusätzliche Komponente K4.

7. Voranstrichmittel nach Anspruch 6, **gekennzeichnet durch** einen Anteil der Komponente K4 Anteil von 1 Gew.-% bis 30 Gew.-% Trockengehalt, bezogen auf die Gesamtmasse des getrockneten Voranstriches.

8. Voranstrichmittel nach Anspruch 7, **gekennzeichnet durch** einen Anteil der Komponente K4 Anteil von 3 Gew.-% bis 20 Gew.-% Trockengehalt, bezogen auf die Gesamtmasse des getrockneten Voranstriches.

9. Voranstrichmittel nach Anspruch 8, **gekennzeichnet durch** einen Anteil der Komponente K4 Anteil von 5 Gew.-% bis 15 Gew.-% Trockengehalt, bezogen auf die Gesamtmasse des getrockneten Voranstriches.

10. Voranstrichmittel nach einem der vorhergehenden Ansprüche, **gekennzeichnet durch** ein wässriges Rheologiestellmittel.

11. Voranstrichmittel nach einem der vorhergehenden Ansprüche, **gekennzeichnet durch** eine Einfärbung mittels wasserbasierender Farbpasten.

## Claims

1. Water-based undercoat composition free of organic solvents for corrosion control at welds (2) and other repair sites on plastic-sheathed steel pipes (1) with and without cathodic protection, at least comprising:
- a component K1: a water-based rubber dispersion with a rubber from the group of butyl, bromobutyl, isoprene or chloroprene rubber or combinations thereof, for formation of a barrier layer for isolating the metallic repair site from oxygen, water vapour and water penetrating from externally;
- a component K2: a water-based resin dispersion comprising a hydrocarbon resin and/or a natural resin, for adhesion on the metallic surface (3) of the repair site and on the nonpolar surfaces of the plastic sheathing (S);
- a component K3: an aqueous emulsion of prehydrolysed organofunctional silanes for accelerating the drying, for improving the adhesion to the metallic surface, particularly at elevated temperatures, and for increasing the resistance to cathodic disbondment,
where fractions of the components are as follows, specified in each case as solids content based on the total mass of the dried undercoat:
- component K1 with a fraction of 10 wt% to 60 wt%,
- component K2 with a fraction of 20 wt% to 90 wt% and
- component K3 with a fraction of 0.1 wt% to 10 wt%.

2. Undercoat composition according to Claim 1, **characterized in that** component K3 is selected from a series of organofunctional silanes which have at least one alkoxy group and at least one organic group.

3. Undercoat composition according to Claim 2, **characterized in that** the organic group of component K3 is an amino, vinyl or epoxy group.

4. Undercoat composition according to at least one of the preceding Claims 1 to 3, **characterized by** the following fractions of the components, specified in each case as solids content based on the total mass of the dried undercoat:
- component K1 with a fraction of 15 wt% to 50 wt%,
- component K2 with a fraction of 25 wt% to 85 wt% and
- component K3 with a fraction of 0.2 wt% to 8 wt%.

5. Undercoat composition according to at least one of the preceding Claims 1 to 3, **characterized by** the following fractions of the components, specified in each case as solids content based on the total mass of the dried undercoat:
- component K1 with a fraction of 20 wt% to 40 wt%,
- component K2 with a fraction of 30 wt% to 75 wt% and
- component K3 with a fraction of 0.5 wt% to 5 wt%.

6. Undercoat composition according to any of the preceding claims, **characterized by** a liquid, watersoluble phenol-formaldehyde resin and/or a water-based phenol-formaldehyde resin dispersion as additional component K4.

7. Undercoat composition according to Claim 6, **characterized by** a fraction of component K4 fraction of 1 wt% to 30 wt% solids content, based on the total mass of the dried undercoat.

8. Undercoat composition according to Claim 7, **characterized by** a fraction of component K4 fraction of 3 wt% to 20 wt% solids content, based on the total mass of the dried undercoat.

9. Undercoat composition according to Claim 8, **characterized by** a fraction of component K4 fraction of 5 wt% to 15 wt% solids content, based on the total mass of the dried undercoat.

10. Undercoat composition according to any of the preceding claims, **characterized by** an aqueous rheology modifier.

11. Undercoat composition according to any of the preceding claims, **characterized by** a coloration by means of water-based colour pastes.

## Revendications

1. Apprêt à base d'eau, exempt de solvants organiques, pour la protection contre la corrosion de soudures (2) et d'autres points de réparation sur des tuyaux en acier (1) à gainage plastique, protégés cathodiquement ou non protégés cathodiquement, comprenant au moins :
- un composant K1 : une dispersion de caoutchouc à base d'eau avec un caoutchouc du groupe composé par le caoutchouc de butyle, de bromobutyle, d'isoprène ou de chloroprène ou des combinaisons de ceux-ci, pour réaliser une couche de barrière pour bloquer le point de réparation métallique contre l'eau, la vapeur d'eau et l'oxygène pénétrant de l'extérieur ;
- un composant K2 : une dispersion de résine à base d'eau d'une résine hydrocarbonée et/ou d'une résine naturelle, pour l'adhérence sur la surface métallique (3) du point de réparation et sur les surfaces non polaires du gainage plastique (S) ;
- un composant K3 : une émulsion aqueuse de silanes organofonctionnels préhydrolysés pour accélérer le séchage, améliorer l'adhérence à la surface métallique, notamment à des températures élevées, et augmenter la résistance à l'élimination cathodique de l'adhérence,
les proportions suivantes des composants étant données, indiquées chacune en tant que teneur en matière sèche par rapport à la masse totale de l'apprêt séché :
- composant K1 en une proportion de 10 % en poids à 60 % en poids,
- composant K2 en une proportion de 20 % en poids à 90 % en poids et
- composant K3 en une proportion de 0,1 % en poids à 10 % en poids.

2. Apprêt selon la revendication 1, **caractérisé en ce que** le composant K3 est choisi parmi une série de silanes organofonctionnels ayant au moins un groupe alcoxy et au moins un groupe organique.

3. Apprêt selon la revendication 2, **caractérisé en ce que** le groupe organique du composant K3 est un groupe amino, vinyle ou époxy.

4. Apprêt selon au moins l'une quelconque des revendications précédentes 1 à 3, **caractérisé par** les proportions suivantes des composants, indiquées chacune en tant que teneur en matière sèche par rapport à la masse totale de l'apprêt séché :
- composant K1 en une proportion de 15 % en poids à 50 % en poids,
- composant K2 en une proportion de 25 % en poids à 85 % en poids et
- composant K3 en une proportion de 0,2 % en poids à 8 % en poids.

5. Apprêt selon au moins l'une quelconque des revendications précédentes 1 à 3, **caractérisé par** les proportions suivantes des composants, indiquées chacune en tant que teneur en matière sèche par rapport à la masse totale de l'apprêt séché :
- composant K1 en une proportion de 20 % en poids à 40 % en poids,
- composant K2 en une proportion de 30 % en poids à 75 % en poids et
- composant K3 en une proportion de 0,5 % en poids à 5 % en poids.

6. Apprêt selon l'une quelconque des revendications précédentes, **caractérisé par** une résine phénol-formaldéhyde liquide soluble dans l'eau et/ou une dispersion de résine phénol-formaldéhyde à base d'eau en tant que composant supplémentaire K4.

7. Apprêt selon la revendication 6, **caractérisé par** une proportion du composant K4 de 1 % en poids à 30 % en poids de teneur en matière sèche, par rapport à la masse totale de l'apprêt séché.

8. Apprêt selon la revendication 7, **caractérisé par** une proportion du composant K4 de 3 % en poids à 20 % en poids de teneur en matière sèche, par rapport à la masse totale de l'apprêt séché.

9. Apprêt selon la revendication 8, **caractérisé par** une proportion du composant K4 de 5 % en poids à 15 % en poids de teneur en matière sèche, par rapport à la masse totale de l'apprêt séché.

10. Apprêt selon l'une quelconque des revendications précédentes, **caractérisé par** un agent de rhéologie aqueux.

11. Apprêt selon l'une quelconque des revendications précédentes, **caractérisé par** une coloration au moyen de pâtes colorantes à base d'eau.
